(19) Europäisches Patentamt
European Patent Office
Office européen des brevets

(11) Veröffentlichungsnummer: **0 496 932 A2**

(12) # EUROPÄISCHE PATENTANMELDUNG

(21) Anmeldenummer: **91108997.7**

(51) Int. Cl.$^5$: **H01M 4/60**

(22) Anmeldetag: **01.06.91**

(30) Priorität: **01.02.91 DE 4102958**

(43) Veröffentlichungstag der Anmeldung:
**05.08.92 Patentblatt 92/32**

(84) Benannte Vertragsstaaten:
**AT BE CH DE DK ES FR GB GR IT LI LU NL SE**

(71) Anmelder: **Schuster, Dietrich, Dr.**
**Am Käfernberg 7**
**W-6741 Frankweiler / Pfalz(DE)**

(72) Erfinder: **Schuster, Dietrich, Dr.**
**Am Käfernberg 7**
**W-6741 Frankweiler / Pfalz(DE)**

(74) Vertreter: **Ratzel, Gerhard, Dr.**
**Seckenheimer Strasse 36a**
**W-6800 Mannheim 1(DE)**

(54) **Verfahren zur Herstellung einer Polymerelektrode, genannt Mesomerelektrode.**

(57) Die Erfindung betrifft ein Verfahren zur Herstellung einer Polymerelektrode, genannt "Mesomerelektrode", wobei man Kohlenstoff und mindestens ein Vinylpolymeres zusammen mit mindestens einem in der Stammkette zumindest ein Halogenatom aufweisendes Polyvinylchlorid und/oder zusammen mit mindestens einer Polyvinylidenverbindung und/oder zusammen mit mindestens einem Halogenkohlenwasserstoff bei einem spezifischen Flächendruck von 1 bar/cm$^2$ bis 10 000 bar/cm$^2$ und einer Temperatur von 20 °C bis 400 °C miteinander vereinigt.

EP 0 496 932 A2

Die vorliegende Erfindung bezieht sich auf ein Verfahren zur Herstellung einer Polymerelektrode, die als Mesomerelektrode zu definieren ist, weil der Funktionsmechanismus sich aus der Verschiebung der Verbindungselektronen herleitet.

Zum nächstkommenden Stand der Technik ist das deutsche Patent 38 09 758, dessen Inhaber der Anmelder vorliegender Offenbarung ist, zu nennen, da es sich auf ein Verfahren zur Herstellung einer Polymerelektrode durch Vereinigung durch Kohlenstoffteilchen mit Kunststoffmaterial bezieht.

Die vorliegende Erfindung knüpft nun an den Inhalt der DE-PS 38 09 758 an und schafft demgegenüber eine neue, nicht naheliegende technische Lehre, die einen sprunghaften und überraschenden und damit patentbegründenden fortschrittlichen Effekt bedingt.

Wie im DE-PS 38 09 758 gezeigt wurde, war der erfinderische Gedanke dort darin begründet, daß es unter den Bedingungen des beschriebenen Herstellungsverfahrens zwischen dem Kohlenstoff einerseits und dem Vinylpolymeren andererseits, zu einer chemischen Reaktion kommt, durch welche zwischen den Reaktionspartnern (Kohlenstoff und Vinylpolymeren) eine Bindung entsteht, die nunmehr zwischen dem elektrischen Leiter Kohlenstoff und dem Nichtleiter Vinylpolymeren zu einer, durch den Stromfluß ansprechbaren Koppelung führt, die schließlich das Leitungs- und Speichervermögen des Gesamtkörpers verursacht.

Dieser Gedanke der Koppelung zwischen dem Kohlenstoffgitter einerseits und dem Vinylpolymeren andererseits, ist eine notwendige Voraussetzung, um das Leitungs- und Speichervermögen eines solchen Stoffes erklären zu können, denn nur wenn die $\pi$ -Elektronen des Kohlenstoffgitters mit den Bindungselektronen des Polymeren gekoppelt sind, kann eine Weitergabe des elektrischen Stromes erfolgen.

In der Bindungstheorie der organischen Chemie werden solche Koppelungen auch als Resonanz, bzw. Mesomerie bezeichnet. Unter Mesomerie versteht man in der Chemie bekanntlich die Ausbildung verschiedener Grenzstufen für die Ladungs- und Bindungszustände innerhalb eines Moleküls.

Dieser Begriff wird hier zur Deutung der elektrischen Eigenschaften von Stoffsystemen benutzt, deren elektrochemisches Verhalten nicht mit den klassischen Begriffen der Reduktion und Oxydation beschrieben werden können.

Die Mesomerie wird hier als eine Hypothese zur Verständlichmachung von physikalisch-chemischen Phänomenen der betreffenden Stoffsysteme benutzt, um zwischen den Theorien für das elektrische Verhalten der metallischen Bindungen auf der einen Seite und organischen Molekülgittern (Isolatoren) auf der anderen Seite zu vermitteln.

Wenn die $\pi$ -Elektronen durch Resonanz oder Mesomerie über das Gesamtsystem verteilt werden können, so bedeutet dies, daß die Energie des Gesamtsystems insgesamt niedriger liegt als die Summe der einzelnen Bindungsenergien, wodurch die Beständigkeit des Systems aber höher liegt.

Werden durch einen fließenden Strom zusätzliche $\pi$ -Elektronen in ein mesomeres System eingespeist, so bleibt dieses System solange aufnahmefähig, wie die zusätzliche Energie über die Resonanzenergie des Gesamtsystems aufgenommen werden kann.

Das Hineinpumpen oder die Abgabe von Elektronen in einem solchen Resonanzsystem bedeutet aber, daß zusätzliche Energie gespeichert werden kann. Ein solches System leitet dann nicht nur den elektrischen Strom, sondern es speichert ihn auch, wobei die aufgenommene Energie durch die Anzahl der aufgenommenen Elektronen bestimmt wird, die unter der Resonanzenergie zusammengehalten werden.

Auf der Basis vorgenannter Erkenntnis, wurde mit vorliegender Erfindung ein neuer Weg gefunden, wie man den, aus der Mesomerie sich ableitenden Speichervorgang dazu nutzen kann, elektrische Energie in viel höherem Maße zu speichern, als dies bisher der Fall war, wie dies in der DE-PS 38 09 758 beschrieben ist.

Waren es dort etwa 25 Ah/kg bis 30 Ah/kg, was in etwa den Werten des Bleiakkus entspricht, so wurde nunmehr gefunden, daß sich mit den hier geoffenbarten und beanspruchten Elektroden ganz wesentlich höhere Energiemengen speichern lassen.

Der vorliegenden Erfindung liegt somit die Aufgabe zugrunde, durch Einbau neuer Elemente in das bereits bestehende System die Aufnahme höherer Energiemengen zu bewerkstelligen.

Diese vorgenannte Aufgabe wird bei einem Verfahren der eingangs genannten Gattung erfindungsgemäß dadurch gelöst, daß man Kohlenstoff und mindestens ein Vinylpolymeres zusammen mit mindestens einem in der Stammkette zumindest ein Halogenatom aufweisendes Polyvinylchlorid und/oder zusammen mit mindestens einer Polyvinylidenverbindung und/oder zusammen mit mindestens einem Halogenkohlenwasserstoff bei einem spezifischen Flächendruck von 1 bar/$cm^2$ bis 10 000 bar/$cm^2$ und einer Temperatur von 20 ° C bis 400 ° C miteinander vereinigt.

Bevorzugte Ausführungsformen vorliegender Erfindung sind in den Unteransprüchen dargelegt.

Diese Halogene werden durch direktes Einbringen von chlorierten und fluorierten organischen Verbindungen eingebracht, so daß zusätzlich zu den bereits im DE-PS 38 09 758 beschriebenen Vinylpolymeren, chloriertes Polyvinylchlorid, chloriertes Polyethylene, chloriertes Polypropylen, Polyvinyldenchlorid, Polyvinyldenfluorid, chloriertes Isoprenpolybutadien und/oder chloriertes oder fluoriertes Polyethylen usw. eingebracht werden.
Das Verhältnis, in dem diese Stoffe eingebaut werden, wird nicht nur von den zu fordernden elektrischen Eigenschaften bestimmt, sondern ebenso auch von dem mechanischen, den thermischen, den chemischen usw. Eigenschaften, so daß eine große Variationsbreite gegeben ist.

Trotzdem sind die Richtlinien der Herstellung einfach, denn es bedarf lediglich eines Mischers, um das Stoffgemisch zu einer preßfähigen, pulverförmigen oder pastösen Masse zu mischen, die dann in einer Form, unter Anwendung von spezifischen Flächendrücken von 10 bar/cm$^2$ bis 10 000 bar/cm$^2$ und unter gleichzeitiger Anwendung von erhöhten Temperaturen mit Kohlenwasserstoff vereinigt werden. Zur Herstellung des Ausgangsmaterials werden der Kohlenstoff in Form von Ruß, Aktivkohle oder Graphit mit dem Vinylpolymerem und dem fluorierten oder chlorierten Polymeren entweder getrennt und/oder einzeln, und/oder teilweise getrennt und/oder teilweise einzeln miteinander gemischt, wobei die Polymeren auch teilweise oder ganz in gelöster oder emulgierter Form eingebracht werden können oder, indem das Polymere zunächst mit flüssigem Stickstoff versprödet und dann gemahlen, oder das Polymere gelöst oder emulgiert und/oder dispergiert, mit dem Kohlenstoff vereinigt wird, und das vereinigte Material wieder versprödet und gemahlen, miteinander vermischt werden, oder indem man das gemahlene Material mit dem beispielsweise pastös, in dispergierter Form vorliegende Teil vermischt und somit pastös oder krümelig oder in Pulverform in die Form bringt, in der dann, nach Ausdampfen von Wasser oder Lösungsmittel, die Pressung und Vereinigung vorgenommen wird.

Im folgenden wird ein tieferer theoretischer Deutungsversuch des überraschenden Verhaltens angegeben, daß nämlich durch das Einbringen von zusätzlich chlorierten, fluorierten, allgemein halogenisierten Verbindungen eine wesentliche Erhöhung des Energieinhaltes und auch der Leistung solcher Elektroden eintritt.

Dabei muß man von der Tatsache ausgehen, daß die Vereinigung von Kohlenstoff und Vinylverbindung unter Zusatz von Halogen bzw. halogenierten Verbindungen, einen Einbau dieser Verbindungen in den Verband des Kohlenstoffes zur Folge hat, wobei zwischen die Gitterebenen des Kohlenstoffes Schichten der halogenierten Vinylverbindung und des zusätzlichen Halogenwasserstoffes als unmittelbare Folge des großen Druckes, unter welchem die Partner vereinigt werden, zum Einbau gelangen.

Es ergibt sich wahrscheinlich dabei eine Schichtstruktur, in der abwechselnd Kohleschichten mit bis zu einem Molekül dicken PVCC-Schichten abwechseln. Eine solche Struktur kann man als ein, durch PVCC intercaliertes, Graphitgitter auffassen.

Während ein Graphitgitter mit seinen frei verfügbaren $\pi$ -Elektronen den elektrischen Strom zwar leiten, aber nicht speichern kann, hat dieses neu gebildete Gitter beide Möglichkeiten dadurch gewonnen, daß durch das Chlor an der Vinylkette, bzw. durch das zusätzliche Chlor eine, durch den elektrischen Strom polarisierbare Gitterstörung in das Gesamtgitter kommt, weil das Halogen eine andere Größe, einen anderen Bindungsabstand und eine andere Kernladung und auch eine andere Elektronegativität besitzt, als die, es umgebenden Kohlenstoffatome, mit denen es nunmehr in Resonanz, bzw. Mesomerie steht.

Könnte man in den klassischen Strukturformeln dieses Verhalten noch durch zwei verschiedene, mesomere Formeln ausdrücken, z. B.:

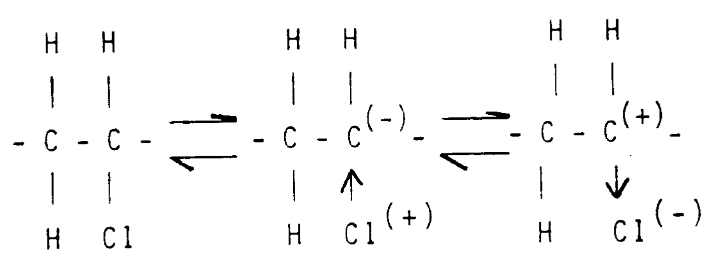

so ist dies jetzt nicht mehr möglich, da die Gesamtenergie des Systems eine Lokalisierung der Ladung auf einzelne Ladungszustände ausschließt. Das Gesamtsystem Kohlenstoff-Halogen-Kohlenwasserstoff kann zwar Ladungen aufnehmen oder abgeben und dadurch eine, im jeweiligen Sinne, andere Gesamtladung annehmen, jedoch ist es nicht mehr möglich, diese Ladung einem einzelnen Atom zuzuordnen, wie bei den klassisch-kanonischen Formeln; vielmehr wird das durch die negativen, bzw. positiven Ladungsträger gestörte Gesamtsystem energetisch durch die Mesomerie an dem Gesamtsystem anteilig und dadurch stabilisiert. Dies ist deshalb von allergrößter Bedeutung, weil damit gegenüber allen anderen elektrischleitenden und - speichernden Kunststoffen eine viel höhere chemische oxidative Beständigkeit erreicht wird.

Während Polypyrrol, Polyanilin, Polyacetylen usw. ihrer Struktur nach amorphe Körper sind, also kein Schichtgitter besitzen, kommt es nicht zur Ausbildung vieler Mesomeriemöglichkeiten zwischen dem Schichtgitter des Kohlenstoffes und den eingebauten Halogenkohlenwasserstoffen, wie in der vorliegenden Erfindungsoffenbarung beschrieben. Deshalb sind jene oxydativ unbeständig, während diese oxydativ beständig sind.

Was nun die Kapazität der vorliegend beschriebenen Mesomerelektroden gegenüber den in der DE-PS 38 09 758 beschriebenen anbelangt, so ist diese theoretisch und praktisch bedeutend höher, wie die folgenden Beispiele zeigen:
Die Kapazität einer elektrochemischen Zelle ist dadurch bestimmt, daß man den für die Oxydation, bzw. Reduktion ablaufenden chemischen Vorgang pro Mol Stoff auf das Mol der bewegten Elektronen bezieht und auf Kilogramm des betreffenden Stoffes umrechnet, da die Angaben in der Technik stets die Energiemenge pro Masse (kg) angeben und nicht pro Mol.

Nimmt man beispielsweise die Oxydation von Chlor

$$Cl' \rightarrow 1/2\ Cl_2 + 1e\ (z)$$

so ergibt sich

$$C_{theoretisch} \overset{+}{=} \frac{1\,000 \times z\ F}{Mg}$$

$$C_{th} = x\ \frac{1\,000 \times 1 \times 26{,}77}{35{,}5}$$

$$C_{th} = 754\ Ah/kg$$

\+ ist ein Faktor, den man als Massenausnutzungsgrad bezeichnen kann. Er ist in diesem Falle gleich 1, liegt aber in der Praxis immer < 1.

Wendet man dieselbe Methode auf einen, nach den Beispielen der DE-PS 38 09 758 sich ergebenden Umsatz an, so hat z. B. eine Elektrode, bestehend aus 50 % Kohlenstoff und 50 % PVC, eine stöchinometrische Zusammensetzung von $C_8H_3Cl$ mit einem Molgewicht von 134,5 g. Dies ergibt mit z = 1 ein $C_{th}$ von 199 Ah/kg.

Zum Vergleich sei angemerkt, daß sich der Wert des Bleiakkus, theoretisch für $PbO_2$ mit z = 2, zu 224 Ah/kg berechnet.

Dagegen erhält man, wenn man nach der hier geoffenbarten Erfindung arbeitet, für eine Mesomerelektrode der gleichen Zusammensetzung, aber mit 50 % PVCC ein theoretisches Molgewicht von $C_4HCl$ von 85,5 und mit z = 1, ein $C_{th}$ von 313 Ah/kg.

Für eine Mesomerelektrode der Zusammensetzung 50 % Kohlenstoff und 25 % PVC und 25 % PVDF

ergibt sich für die theoretische Verbindung ein Molgewicht von 152,4 und ein z von 2 C = 342 Ah/kg. Als praktischen Wert für diese Zusammensetzung, siehe Beispiele 3, wurde ein Wert von 40 Ah/kg gefunden.

Der hohe theoretische Energieinhalt der Mesomerelektroden bedeutet, daß nunmehr auch Speichersysteme gebaut werden können, die eine höhere spezifische Speicherfähigkeit besitzen, als die bisher bekannten Systeme aus Metallen und Metalloxiden, so daß sich insbesondere für Fahrzeuge eine günstige Möglichkeit der Energiespeicherung ergibt, denn erst mit Erreichen eines hohen spezifischen Energieinhaltes, ist ein Einsatz in Automobilen denkbar, da ja die Masse des Speichers mitbeschleunigt werden muß.

Die bisherige Rechnung, wonach

1 kg Benzin 40 MJ

1 kg Bleiakku aber nur 0,1 MJ

Energie enthält, könnte damit erstmalig durch ein nichtmetallisches System überwunden werden.

Ausführungsbeispiele:

Beispiel 1:

10 g Aktivkohle aus Torf gewonnen, mit einer Teilchengröße von 10µ bis 100µ und
1 g Polyvinylchlorid
10 g chloriertes PVC mit einem Chlorgehalt von 70 %
werden in einer Schlagkugelmühle 30 Minuten gemahlen und anschließend wird dieses Gemich mit je
0,5 g in eine beheizbare Stahlform der Abmessung von
5 $cm^2$ Oberfläche überführt und dann mit einem spezifischen Flächendruck von
4 500 $kg/cm^2$ eine Stunde bei
160° C miteinander zur Verbindung gebracht.

Die so gewonnenen Elektroden haben nach Einbau in eine Prüfzelle mit einem $\epsilon$ -Abstand von 1 mm mit einer 30 %igen LiCl-Lösung als Elektrolyten und einer Polarisationsdauer von 12 Stunden, eine rezyklierbare Kapazität von 40 Ah/kg, wobei die mittlere Spannung 800 mV beträgt.

Beispiel 2:

10 g Aktivkohle mit einer Teilchengröße von 10µ - 100µ
5 g sehr hochmolekulares PVC und
5 g chloriertem PVC mit einem Gesamtchlorgehalt von 70 %
werden in einer Schlagkugelmühle 30 Minuten gemahlen und anschließend wird das Gemisch in eine heizbare Stahlform überführt und mit einer Einwaage von je zwei Elektroden von je 0,5 g auf eine Oberfläche von 5 $cm^2$ verteilt und dann das Gemisch 60 Minuten einem spezifischen Flächendruck von 4 500 kg bei 110° C ausgesetzt und dadurch miteinander vereinigt. Die fertigen Elektroden werden in einer Prüfzelle mit 30 % LiCl in wässriger Lösung 12 Stunden mit einem Konstantstrom von 100 mA polarisiert und haben dann eine Kapazität von 35 Ah/kg bei einer mittleren Spannung von 0,75 Volt.

Beispiel 3:

10 g Aktivkohle mit einer Teilchengröße von 10µ bis 100µ

werden in eine Emulsion von
2,5 g Polyvinylidenchlorid in
100 ml Wasser eingetragen und 2 Std. gerührt.
Sodann wird das gewonnene Aktivkohle-Polyvinylidenchlorid-Gemisch abfiltriert und getrocknet, das trockene Pulver in einer Turbomühle 10 Minuten gemahlen, zu einer Mischung von
75 g Polyvinylidenchlorid und
2,5 g Polyvinylchlorid zugefügt und in einer Schlagkugelmühle 10 Minuten vermischt.
Anschließend wird das Gemisch 90 Minuten bei einer Temperatur von 185° C, bei einem spezifischen Flächendruck von
2 000 $kg/cm^2$ miteinander vereinigt. In einer Prüfzelle mit einer gesättigten KCl/Lösung als Elektrolyt, haben die Elektroden, nach einer Polarisationszeit von 20 Stunden eine Kapazität von 40 Ah/kg, bei einer mittleren Spannung von 0,8 Volt.

Beispiel 4:

10 g Aktivkohle mit einer Teilchengröße
von 10µ bis 100µ
werden in eine Emulsion von
2 g Chloropren in
100 ml Dichloräthan in einem geschlossenen Gefäß 6 Stunden geschüttelt; sodann wird das Dichloräthan abdestilliert, der Rückstand getrocknet, anschließend in einer Turbomühle gemahlen und mit
2 g Chloropren,
die in flüssigem Stickstoff versprödet und gemahlen wurden, vermischt.
Anschließend werden dem Gemisch
6 g Polyvinylidenfluorid und
1 g Polyvinylchlorid
in Pulverform hinzufügt, und das Gemisch zusammen 10 Minuten in einer Schlagkugelmühle vermischt.

Dieses Gemisch wird, wie beschrieben, zunächst 1 Stunde bei einem spezifischen Flächendruck von
250 kg/cm$^2$ bei 170° gesintert und sodann bei
200° C, 30 Minuten miteinander, bei einem spezifischen Flächendruck von
5 000 kg/cm$^2$ vereinigt.

Nach einer Polarisationszeit von 12 Stunden in einem Elektrolyten von 30 %igem LiCl in $H_2O$, wird eine rezyklierbare Kapazität von 38 Ah/kg gemessen, bei einer mittleren Spannung von 1 Volt.

Beispiel 5:

Ein Gemisch von 1 g synthetischem Graphit mit
9 g Aktivkohle wird in einer Kugelmühle 12 Stunden innig vermahlen, dann werden dem Gemisch
2 g feinst-gemahlenes
Polystyrol
und
6 g chloriertes Polypropylen mit einem Chlorgehalt von 68 % und
2 g chloriertes
Polyvinylchlorid mit einem Chlorgehalt von 70 % zugesetzt, dann das Gesamtgemisch 10 Minuten in einer Schlagkugelmühle gemahlen, bei
140° C zwei Stunden, bei einem spezifischen Flächendruck von 200 kg/cm verpreßt und dann bei
180° C
30 Minuten bei einem Flächendruck von
10 000 kg/cm miteinander vereinigt.
Die so gewonnen Elektroden haben, nach der 12 stündigen Polarisation in 10 %iger Schwefelsäure als Elektrolyt, eine Kapazität von 41 Ah/kg, bei einer mittleren Spannung von 0,75 Volt.

Beispiel 6:

9 g Aktivkohle und
1 g Hochleitfähigkeits-Ruß
werden 12 Stunden zusammen in der Kugelmühle gemahlen.
Anschließend werden dem Gemisch
4 g Polyvinylfluorid
4 g Polyvinylchlorid
2 g Polyvinylidenfluorid und
1 g Polytetrafluoräthylen in Pulverform
zugesetzt und das Gemisch 30 Minuten in der Schlagkugelmühle gemahlen.
Die anschließende Vereinigung erfolgt bei einer Temperatur von
240° C und einem Druck von
4 500 kg/cm$^2$ in 25 Minuten.
Die so gewonnenen Elektroden haben nach 20 stündiger Polarisation in 30 % LiCl-Lösung in Wasser als Elektrolyt, eine rezyklierbare Kapazität von 42 Ah/kg, bei einer mittleren Spannung von 1,1 Volt.

Beispiel 7:

500 mg sulfoniertes Polyvinylbenzol werden mit
2 000 mg PPC (chloriertes Polypropylen),

2 000 mg PVC (Polyvinylchlorid) und
2 000 mg PVDF (Polyvinylidenfluorid) und
6 500 mg Aktivkohle aus Braunkohle mit einer Teichengröße

von 10µ bis 100µ 10 Minuten in einer Schlagkugelmühle vermahlen und anschließend auf eine Kohlefasermatte von 10 $cm^2$ eine runde Form aufgesetzt, diese mit

500 mg des obigen Gemisches gefüllt und über einem dicht schließenden Zylinder eine Stunde lang bei einem Druck von 1 000 bar bei 170 °C verpreßt.

Die so gewonnenen Preßlinge finden bevorzugt als Anoden für wiederaufladbare Zellen Verwendung und entwickeln dort, mit einer Elektrode des nächsten Beispiels als Kathode kombiniert, in einer 40 %-igen wässrigen LiCL-Lösung als Elektrolyt, eine Kapazität von 48 mAh/g.

Beispiel 8:

500 mg eines Polyvinylbenzyltrimethylammoniumchlorids werden mit
2 000 mg PPC
2 000 mg PVC und
2 000 mg PVDF und
6 500 mg Aktivkohle aus Braunkohle mit einer
Teilchengröße von 10µ bis 100µ 10 Minuten in einer Schlagkugelmühle vermahlen und anschließend auf eine Kohlefasermatte von 10 $cm^2$ eine runde Form aufgesetzt, diese mit

500 mg obigen Gemisches gefüllt und über einem dicht schließenden Zylinder eine Stunde lang bei einem Druck von 1 000 bar bei 170 °C verpreßt.

Die so gewonnenen Preßlinge finden bevorzugt als Kathode für wiederaufladbare Zellen Verwendung und entwickeln dort mit einer Anode des letzten Beispiels kombiniert, in einer 40 %-igen wässrigen LiCL-Lösung als Elektrolyt, eine Kapazität von 48 mAh/g.

Beispiel 9:

2 000 mg PS (Polystyrol)
2 000 mg chloriertes Polyäthylen
2 000 mg Polyvinylchlorid und
4 000 mg Aktivkohle und

200 mg Hochleitfähigkeitsruß werden gemeinsam 30 Minuten lang in einer Schlagkugelmühle vermahlen und

500 mg davon anschließend, wie in Beispiel 7 und 8 beschrieben, auf eine Kohlefasermatte, bei einem Druck von 2 000 bar bei einer Temperatur von 160 ° C eine Stunde lang aufgepreßt.

Die so gewonnenen Preßlinge können sowohl als Anoden als auch als Kathoden, beispielsweise in einer 30 %-igen wässrigen $CaCl_2$-Lösung als Elektrolyt für wiederaufladbare Zellen Verwendung finden, wo selbst sie eine Kapazität von 50 mAh/g entwickeln können.

## Patentansprüche

**1.** Verfahren zur Herstellung einer Polymerelektrode, genannt "Mesomerelektrode",
dadurch gekennzeichnet,
daß man Kohlenstoff und mindestens ein Vinylpolymeres zusammen mit mindestens einem in der Stammkette zumindest ein Halogenatom aufweisendes Polyvinylchlorid und/oder zusammen mit mindestens einer Polyvinylidenverbindung und/oder zusammen mit mindestens einem Halogenkohlenwasserstoff bei einem spezifischen Flächendruck von 1 bar/$cm^2$ bis 10 000 bar/$cm^2$ und einer Temperatur von 20 °C bis 400 °C miteinander vereinigt.

**2.** Verfahren nach Anspruch 1,
dadurch gekennzeichnet,
daß die eingesetzte Polyvinylidenverbindung halogenhaltig ist.

**3.** Verfahren nach mindestens einem der Anspruche 1 oder 2,
dadurch gekennzeichnet,
daß der eingesetzte Halogenkohlenwasserstoff alkyl- und/oder arylsubstituiert ist.

**4.** Verfahren nach mindestens einem der Ansprüche 1 bis 3,
dadurch gekennzeichnet,
daß die Partner der Vereinigung vor der Vereinigung in einen Zustand höchster Feinheit und höchster Durchmischung gebracht werden unter wahlweise Anwendung an sich bekannter, technisch- physikalischer Verfahren der Mahlung und Feinverteilung der Partikel untereinander, ineinander und miteinander.

**5.** Verfahren nach mindestens einem der Ansprüche 1 bis 4,
dadurch gekennzeichnet,
daß die miteinander zur Vereinigung gelangenden Stoffe unter Einfluß eines Katalysators miteinander vereinigt werden.

**6.** Verfahren nach Anspruch 5,
dadurch gekennzeichnet,
daß man als metallische Katalysatoren Elemente der Fe, CO, Ni- und Kupfer-Gruppen oder amphotere Katalysatoren der Vanadium-, Chrom- und Mangan-Gruppen und/oder deren Verbindungen einsetzt.

**7.** Verfahren nach mindestens einem der Ansprüche 1 bis 6,
dadurch gekennzeichnet,
daß die hergestellten Mesomerelektroden als elektrische Leiter und Speichermaterial verwendet werden.

**8.** Verfahren nach mindestens einem der Ansprüche 1 bis 7,
dadurch gekennzeichnet,
daß die hergestellten Mesomerelektroden als ein, die elekrische Energie speicherndes Material in wässrigen oder nicht wässrigen Elektrolyten angewendet werden.

**9.** Verfahren nach mindestens einem der Ansprüche 1 bis 8,
dadurch gekennzeichnet,
daß die hergestellten Mesomerelektroden in ihrer mechanischen Festigkeit durch Einbringung von Fasermaterialien, sei es in Faserform, sei es in Mattenform, verstärkt und mit zusätzlichen Kunststoffmaterial verbunden werden.